# EUROPÄISCHE PATENTANMELDUNG

(11) **EP 1 752 210 A1**
(43) Veröffentlichungstag der Anmeldung: **14.02.2007**
(21) Anmeldenummer: 05016422.7
(22) Anmeldetag: 28.07.2005
(51) Int. Cl.: B01J 8/00, B01J 8/06, B65G 69/16

(54) **Vorrichtung zum Befüllen eines Rohres mit partikelförmigem Schüttgut**

(71) Anmelder: Cota, Aldo, 85077 Manching (DE)
(72) Erfinder: Cota, Aldo, 85077 Manching (DE); Poussin, Guillaume, 78800 Houilles (FR)

(57) **Zusammenfassung**

Die vorliegende Erfindung betrifft Vorrichtungen zum schonenden und gleichmäßigen Befüllen eines Rohres, wie insbesondere eines Rohrreaktors, mit partikelförmigem Schüttgut, wie insbesondere Katalysatorpartikeln; speziell ausgestaltete Falldämpferelemente als Bestandteile solcher Vorrichtungen; sowie Verfahren zum Befüllen eines Rohres unter Verwendung dieser Gegenstände.

## Beschreibung

Die vorliegende Erfindung betrifft eine Vorrichtung zum schonenden und gleichmäßigen Befüllen eines Rohres, wie insbesondere eines Rohrreaktors mit partikelförmigem Schüttgut, wie insbesondere Katalysatorpartikeln; speziell ausgestaltete Falldämpferelemente als Bestandteile einer solchen Vorrichtung; sowie Verfahren zum Befüllen eines Rohres unter Verwendung dieser Gegenstände.

### Hintergrund der Erfindung

Für die Durchführung chemischer Reaktionen in mit Katalysatorpartikeln befüllten Rohrreaktoren ist die Güte der Katalysatorfüllung von großer Bedeutung. Ein homogenes Katalysatorbett gewährleistet eine gleichmäßige Temperaturverteilung im Reaktor. Beim Einfüllen der mechanisch häufig sehr empfindlichen Katalysatorpartikel können aufgrund zu großer mechanischen Krafteinwirkung Partikel zerbrechen oder es kann Katalysatormasse abgerieben werden. Dadurch wird die Katalysatorschüttung verdichtet und führt bei Betrieb des Reaktors zu unerwünschten Druckverlusten. Bei ungleichmäßiger Befüllung besteht außerdem die Gefahr der Ausbildung sogenannter Hot Spots, d.h. Zonen unerwünscht erhöhter Temperatur im Reaktor, welche die Steuerung des Reaktionsverlaufs beeinträchtigen. Bei der Befüllung von Rohrreaktoren mit Katalysatorpartikeln ist daher besonderes Augenmerk auf die Homogenität der erhaltenen Schüttung zu richten. Dies versucht man durch möglichst schonende Befüllung des Rohres mit den Katalysatorpartikeln zu erreichen.

Aus der EP-A-0 548 999 ist ein Verfahren zum Befüllen von vertikalen Rohren mit partikelförmigem Material bekannt, bei dem man eine Leine in das Rohr einführt, welche quer zur Leine angeordnete, radiale Dämpfungsmittel in Form von biegsamen Bürsten trägt, deren radiale Ausdehnung geringer ist als der Halbmesser des Rohres. Diese Bürsten geben stufenweise nach, wenn die Partikel darauf fallen. Die Leine wird während des Befüllens nach oben aus dem Rohr gezogen.

Diese aus dem Stand der Technik bekannte Vorrichtung weist gravierende Nachteile in der Praxis auf. Insbesondere verursacht die radiale Anordnung der geraden, kurzen Borsten des Dämpfungsmittels häufig ein unerwünschtes Verstopfen des Rohres während des Füllvorgangs. Das Dämpfungsmittel ist insbesondere im zentralen Bereich, d.h. nahe an der Leine, aufgrund der hohen Borstendichte für die Katalysatorpartikel nicht durchlässig, so dass insbesondere bei zu hoher Füllgeschwindigkeit weniger Partikel durch das Dämpferelement nach unter austreten als von oben nachgefüllt wird. Um diese Störung zu beseitigen muss der Füllvorgang unterbrochen werden, wodurch der gesamte Vorgang unnötig verzögert und die Stillstandszeit der Anlage unnötig verlängert wird. Wenn der Befüllungsvorgang nicht kontinuierlich durchgeführt wird, kann dies außerdem die Homogenität der Partikel-Schüttung beeinträchtigen.

Aufgabe der vorliegenden Erfindung ist daher die Bereitstellung einer Befüllvorrichtung für Rohre, wie Rohrreaktoren, insbesondere solchen mit Durchmessern von mehr als 50 mm, die weniger störanfällig ist und somit ein rascheres, schonendes und gleichmäßiges Befüllen des Rohres mit Schüttgut ermöglicht.

### Kurzfassung der Erfindung

Obige Aufgabe konnte insbesondere durch Bereitstellung einer Füllvorrichtung gelöst werden, die spezielle ausgestaltete Falldämpferelemente aufweist, die einerseits die Fallgeschwindigkeit des Schüttguts verringern und andererseits auch bei hoher Füllgeschwindigkeit nicht verstopfen. Überraschenderweise wurde festgestellt, dass bei Verwendung eines lockeren, flexiblen und irregulären Netzgebildes aus einem oder mehreren flexiblen, gekrümmten Netzelementen anstelle radialer, regulär angeordneter, gerader Borsten ein rascheres und trotzdem störungsfreies und schonendes Befüllen eines Rohres mit partikelförmigem Schüttgut möglich wird.

### Figurenbeschreibung

Figur 1 zeigt eine erfindungsgemäße Füllvorrichtung (1) während der Befüllung eines Rohres (6) mit Schüttgutpartikeln (P). Insbesondere umfasst die Vorrichtung (1) drei erfindungsgemäße Falldämpferelemente (3), welche an einem Träger (2), befestigt sind. Jedes Falldämpferelement (3) trägt eine Vielzahl von irregulär angeordneten Netzelementen (40).

Figur 2 zeigt die Seitenansicht eines erfindungsgemäßen Falldämpferelements (3). Das Falldämpferelement (3) umfasst zwei Ringschrauben (30) zur Befestigung der Falldämpferelements (3) am Träger (2) sowie eine Vielzahl von radial gekrümmten Fasern (400).

Figur 3 zeigt in der Draufsicht eines erfindungsgemäßen Falldämpferelements (3) entsprechend Figur 2 mit radial angeordneten, in gleicher Richtung aber unterschiedlich stark gekrümmten Fasern (400) unterschiedlicher Länge, welche eine asymmetrisches offenes Netzgebilde (4) ausbilden.

Figur 4 zeigt in der Draufsicht eine alternative Ausgestaltung eines Falldämpferelements (3) aus Figur2 mit radial angeordneten, in verschiedenen Richtungen gekrümmten Fasern (400), welche eine asymmetrisches, offenes Netzgebilde (4) ausbilden.

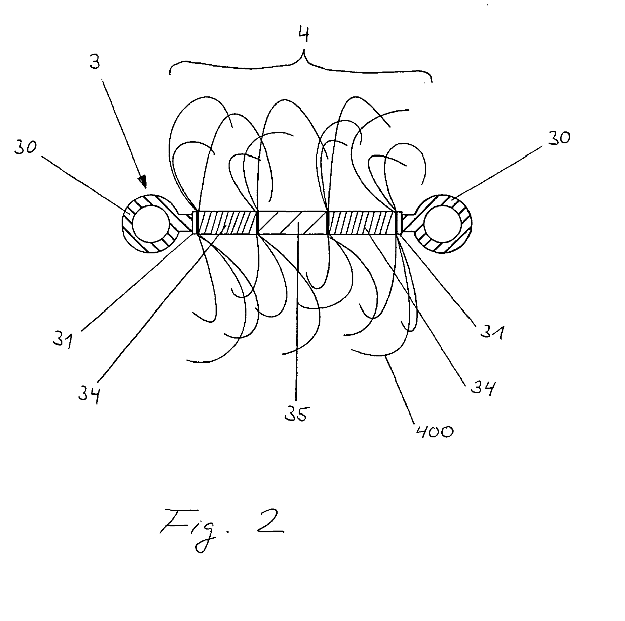

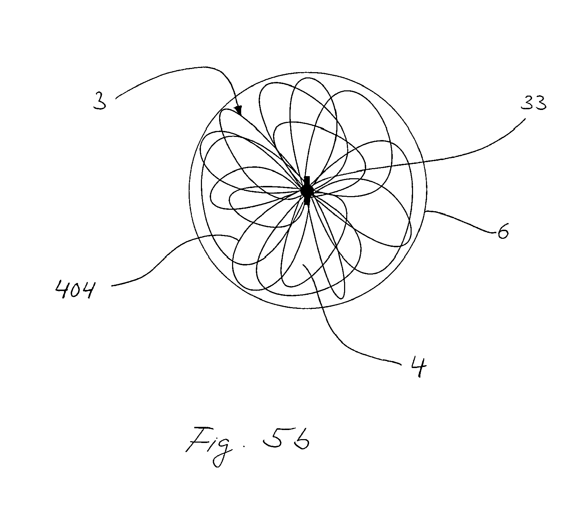

Figur 5a zeigt in der Draufsicht eine weitere alternative Ausgestaltung eines Falldämpferelements (3) aus Figur 2 mit radial angeordneten Schlaufen (402) unterschiedlicher Länge, welche eine asymmetrisches, geschlossenes Netzgebilde (4) ausbilden; Figur 5b zeigt in der Draufsicht eine weitere alternative Ausgestaltung eines Falldämpferelements (3) aus Figur 5a welches von einem durchgehenden elastischen Faden (404) gebildet wird, der schlaufenartige Segmente ausbildet, indem er abschnittsweise am Korpus (33) befestigt ist. Auch hier wird ein asymmetrisches, geschlossenes Netzgebilde (4) ausgebildet.

Figur 6 zeigt verschiedene Ausgestaltungen erfindungsgemäßer Netzelemente (40), und zwar a) als radial gekrümmte Einzelfaser (400), b) als radial gekrümmte S-förmige Doppelfasern (401); c) als Schlaufe (402).

Figur 7 zeigt in schematischer Darstellung eine weitere Ausgestaltung einer in ein Rohr (6) eingesetzte Füllvorrichtung (1a) umfassend einen als Träger dienenden, flexiblen Lichtleiter (50), außerhalb des Rohres (6) verbunden mit einem Monitor (53) und am gegenüberliegenden im Rohr (6) befindlichen Ende ausgestattet mit einer Lichtquelle (52) und einer Linse (51). Die Vorrichtung umfasst drei Falldämpferelemente (3a) welche durch Spiralfedern (8) miteinander federnd verbunden sind.

### Detaillierte Beschreibung der Erfindung

Ein erster Gegenstand der Erfindung ist eine Vorrichtung zum, vorzugsweise vertikalen, Befüllen eines Rohres mit partikelförmigem Schüttgut, umfassend wenigstens ein an einem longitudinalen Träger befestigtes, und zusammen mit dem Träger in das zu befüllende Rohr einführbares Falldämpferelement, dadurch gekennzeichnet, dass das Falldämpferelement ein für die Schüttgutpartikel durchlässiges, flexibles, insbesondere irreguläres Netzgebilde trägt, das aus einer Vielzahl von Netzelementen gebildet wird.

"Durchlässig" im Sinne der Erfindung ist ein Netzgebilde, wenn die Schüttgutpartikel während des Befüllens des Rohres durch das Netzgebilde nicht ungehindert hindurchtreten, sondern mit wenigstens einem Netzelement des Netzgebildes in Kontakt gelangen und auf diese Weise ihre Fallgeschwindigkeit reduziert wird.

Insbesondere ist dabei das Netzgebilde so ausgestaltet, dass es vor Einführen in das Rohr einen maximalen radialen Durchmesser dₘₐₓ aufweist, der etwa dem Rohr-Innendurchmesser dₗ = ± 20 % entspricht. Beispielsweise kann dₘₐₓ = dₗ + 15 % bis dₗ - 15 %, oder dₗ + 5 % bis dₗ -5 % sein. Meist ist dₘₐₓ = dₗ + 2 % bis dₗ - 5 % oder dₗ ± 0 % bis dₗ - 2 %. Typische Rohr-Innendurchmesser dₗ von erfindungsgemäß befüllbaren Rohren liegen im Bereich von mehr als 50 mm, wie z.B. 70 bis 300 mm.

In einer weiteren Ausgestaltung der Erfindung ist das Netzgebilde aus einer Vielzahl von vorzugsweise elastischen Netzelementen gebildet.

Unter einem "Netzgebilde" im Sinne der Erfindung ist dabei eine radiale "offene" oder "geschlossene" Anordnung einzelner Netzelemente am Falldämpferelement zu verstehen. Darüber hinaus zeichnet sich ein erfindungsgemäßes Netzgebilde dadurch aus, dass sich einzelne Netzelemente, wie Fasern, Schlaufen oder Fäden, in ihrer vertikalen Projektion, d.h. in der Draufsicht auf das Falldämpferelement (bzw. in Befüllungsrichtung) kreuzen oder überschneiden. Diese Überschneidungen können dabei bereits vor Einbringen des Falldämpferelements in das zu befüllende Rohr vorliegen, oder erst nach dessen Einbringen in das Rohr durch radiales Zusammendrücken einzelner Netzelemente gebildet werden (insbesondere bei Verwendung von gekrümmten Fasern als Netzelemente). Bei "offener" Anordnung sind die Elemente einseitig, d.h. mit einem Ende, am Falldämpferelement befestigt, bei "geschlossener" Anordnung sind die Netzelemente beidseitig befestigt und einzelne Elemente greifen zusätzlich gegebenenfalls ineinander. Die Netzelemente sind zudem radial so verteilt, dass der vertikale Durchgang der Schüttgutpartikel durch das Falldämpferelement durch ein- oder mehrfachen Kontakt der Schüttgutpartikel mit einzelnen Netzelementen behindert wird.

Auch die Anzahl der Netzelemente je Falldämpferelement kann über einen weiten Bereich schwanken. Sie ist aber so gewählt, dass die Schüttgutpartikel am freien Durchtreten durch das Falldämpferelement behindert werden. In Abhängigkeit von der Schüttgutpartikelgröße kann daher die geeignete Anzahl von Netzelementen durch wenige Vorversuche bestimmt werden.

Durch irreguläre Anordnung der Netzelemente kann die falldämpfende Wirkung des Netzgebildes weiter verbessert werden. Dabei ist das Netzgebilde in seiner vertikalen Projektion, d.h. in der Draufsicht, asymmetrisch ausgebildet.

Weiterhin kann das Netzgebilde in seiner lateralen Projektion, d.h. in seiner Seitenansicht, ebenfalls asymmetrisch sein.

Die Netzelemente sind insbesondere radial und longitudinal verteilt am Falldämpferelement angeordnet, insbesondere dort lösbar befestigt, so dass ein Ersetzen einzelner Elemente im Falle eines Defektes erleichtert wird.

Um ein erfindungsgemäßes Netzgebilde auszubilden, können die Netzelemente in unterschiedlicher Form vorliegenn. Die Netzelemente können beispielsweise als Schlaufen ausgebildet sein, deren beide Enden am Falldämpferelement lösbar befestigt sind.

Innerhalb eines Netzgebildes können einzelne, wie z.B. wenigstens zwei, benachbarte Schlaufen ineinander greifen.

Nach einer weiteren Ausführungsform der erfindungsgemäßen Vorrichtung können die Netzelemente als radial gekrümmte, elastische Fasern mit einem freien und einem am Falldämpferelement befestigten Ende ausgebildet sein. Dabei können die Fasern eines einzelnen Falldämpferelements gleiche oder verschiedene Krümmungsradien aufweisen.

Die am Falldämpferelement befestigten Netzelemente, wie insbesondere die Fasern oder Schlaufen, können entweder vertikal zum Träger orientiert sein, oder aber in und/oder gegen die Fallrichtung des Schüttguts geneigt sein.

Ein Falldämpferelement kann auch Netzelemente (Fasern, Schlaufen, Fäden) verschiedenen Typs in beliebiger Kombination enthalten.

Die Fasern oder Schlaufen eines Netzgebildes können gleiche oder verschiedene Länge aufweisen. Beispielsweise weisen einzelne der Fasern eines Falldämpferelements, insbesondere deren Mehrzahl, d.h. mehr als 50%, wie z.B. 60, 70, 80, 90 oder 100%, eine Länge auf, die größer als der Rohrinnenradius ist. Beispielsweise kann deren Länge 1 bis 100 %, 5 bis 90 %, 10 bis 80 %, 20 bis 70% oder 30 bis 50 % größer als der Rohrinnenradius sein.

Beispielsweise weisen einzelne der Schlaufen eines Falldämpferelements, insbesondere deren Minderzahl, d.h. weniger als 50%, wie z.B. 40, 30, 20 oder 1 bis 10%, eine Hauptachsenlänge auf, die größer als der Rohrinnenradius ist. Beispielsweise kann deren Länge um 1 bis 50 %, oder 2 bis 10 % oder 3 bis 5 % größer als der Rohrinnenradius sein.

Der verbleibenden Teil der Netzelemente (wie Fasern und Schlaufen) weist eine Länge auf, die dem Rohrinnenradius entspricht oder um 1 bis 50%, wie z.B. 2 bis 20% oder 5 bis 10% kleiner ist.

Weiterhin besteht die Möglichkeit, dass die Fasern des Falldämpferelements gleiche oder entgegengesetzte Krümmungsrichtung aufweisen, so dass diese, im Falle entgegengesetzter Krümmungsrichtung ineinander verlaufen.

Das erfindungsgemäße Netzgebilde kann aus verschiedenen geeigneten elastischen Materialien, wie z.B. Kunststoff oder Stahl, gefertigt sein. Rostfreier Stahl ist dabei besonders geeignet. Die Anzahl der Netzelemente je Falldämpferelement, sowie die Geometrie der Netzelement, wie Länge, Krümmung und Durchmesser der Fasern bzw. Schlaufen, in Abhängigkeit von Größe, Gewicht und Fallgeschwindigkeit der Schüttgutpartikel können den Erfordernissen der jeweils vorzunehmenden Rohrbefüllung angepasst werden. Beispielsweise umfasst ein Falldämpferelement 1 bis 100, wie z.B. 3 bis 50 oder 5 bis 20, wie insbesondere 6 bis 12, Netzelemente. Beispielsweise können die Netzelemente einen Durchmesser von 0,3 bis 1,5 mm, insbesondere 0,4 bis 0,8 oder 0,5 bis 0,6 mm aufweisen. Beispielsweise können pro Längeneinheit des Falldämpferelements in Zentimeter 0,5 bis 5 Netzelemente, wie z.B. 1, 2, 3, 4 Netzelemente angeordnet sein. Durch diese aufgelockerte Anordnung von elastischen Netzelementen, wird im Gegensatz zu den gemäß Stand der Technik verwendeten Vorrichtungen mit dichtem, bürstenartigem Besatz von relativ starren Borsten die Gefahr eines Partikelrückstaus und damit eines ungewollten Verstopfens des Rohres während des Befüllens wirksam verringert oder unterbunden. Damit kann bei Verwendung der erfindungsgemäßen Vorrichtung die Füllgeschwindigkeit im Vergleich zum Stand der Technik deutlich erhöht werden.

Anzahl und Ausgestaltung der Netzelemente können so gewählt werden, dass die Schüttgeschwindigkeit oder Füllleistung im Vergleich zu herkömmlichen Bürsten unter Standardbedingungen deutlich verbessert wird. So kann ein vertikales Rohr, wie z.B. ein Reformer-Rohr, beispielsweise mit einem Innendurchmesser von 100 mm und bei Verwendung von Katalysatorpartikeln mit einem Gewicht von etwa 2 bis 4 g und einem Durchmesser von etwa 15 bis 20 mm, wie z.B. 2g/16,1 mm oder 4g/19,6 mm, erfindungsgemäß mit einer Geschwindigkeit von 0,5 bis 1,5, insbesondere 0,5 bis 1,3, oder 0,8 bis 1,2 oder 0,9 bis 1,1 Minuten/Meter Rohr störungsfrei und ohne Beschädigung der Partikel befüllt werden. Mit herkömmlichen Bürsten und unter identischen Bedingungen sind dagegen maximale Füllgeschwindigkeiten von nur 1,36 bis 1,81 Minuten/Meter erreichbar.

Eine erfindungsgemäße Füllvorrichtung kann je nach Bedarf mit einer variablen Anzahl von Falldämpferelementen ausgestattet sein. Beispielsweise kann eine erfindungsgemäße Vorrichtung ein bis fünf Falldämpferelemente pro Längeneinheit, wie z.B. pro Meter tragen. Die Gesamtzahl der Elemente kann z.B. im Bereich von 1 bis 20 je Vorrichtung liegen. Die Vorrichtung kann besonders vorteilhaft modular aufgebaut sein, d.h. im Falle eines Defekts oder bei Verschleiß können einzelne Elemente ausgetauscht werden.

Jedes einzelne Falldämpferelement kann eine Länge von 5 bis 20, wie z.B. 8 bis 12 Zentimetern aufweisen und pro Zentimeter 0,5 bis 5 Netzelemente, wie insbesondere Schlaufen oder Fasern, tragen. Wie später noch erläutert, kann ein Falldämpferelement aber auch nur ein einziges fadenförmiges Netzelement umfassen, welches mehrfach unter Ausbildung von Schlaufen entlang des Falldämpferelements lösbar mit diesem verbunden ist.

Erfindungsgemäß ist es besonders zweckmäßig, wenn die einzelnen Falldämpferelement ebenfalls einen modularen Aufbau besitzen, so dass einzelne Netzelemente bei Bedarf rasch ersetzt werden können. Die gelingt beispielsweise dadurch, dass das Falldämpferelement aus einer Serie, wie z.B. 2 bis 10, miteinander verschraubbarer Segmente, wie z.B. Hülsen oder Muttern mit Innengewinde, zusammengesetzt ist. Die Netzelemente, wie z.B. die elastischen Fasern oder Schlaufen, können dann mit Hilfe von an der Faser, der Schlaufe oder dem Faden ausgebildeten Ösen zwischen zwei solcher Segmenten eingesetzt, radial ausgerichtet und durch Verschrauben der Segmente fixiert werden.

Der erfindungsgemäße Träger der Füllvorrichtung ist flexibel ausgebildet und kann beispielweise eine Schnur, ein Band oder ein Seil sein. Im Allgemeinen besteht der flexible Körper aus geflochtenen natürlicher oder synthetischer oder metallischer Fasern. Beispiele hierfür sind Seile aus Metall, wie Stahl, oder Nylon. Seile aus Edelstahl sind besonders bevorzugt.

Der Träger kann unterschiedliche Querschnitte aufweisen, hat vorzugsweise jedoch einen kreisförmigen Querschnitt. Typische Durchmesser liegen im Bereich von etwa 2 bis 10 mm, wie z.B. 3 bis 8 oder 3,5 bis 6 mm.

Eine weitere bevorzugte Ausführungsform der Vorrichtung ist so ausgebildet, dass der Träger selbst Federelemente umfasst oder aus einer Vielzahl von Federelementen gebildet wird. Diese Federelemente können beispielsweise Spiralfedern sein, die aus Metall, wie Stahl, gefertigt sind, die zwei benachbarte Falldämpferelemente federnd verbinden. Dadurch kann der Füllvorgang noch schonender durchgeführt werden. Die einzelnen Federelemente können bezüglich Geometrie und Federkraft den jeweiligen Anforderungen angepasst werden. Insbesondere größere oder schwerere Partikel werden dadurch besonders geschont.

In einer weiteren Ausgestaltung kann die Vorrichtung eine Vielzahl, wie z.B. 2 bis 5, seriell angeordneter Falldämpferelemente umfassen, die mit Spiralfederelementen verbunden sind, und wobei gleichzeitig ein flexibler Träger, wie. z.B. ein Stahlseil, mittig durch die Federelemente und die Falldämpferelemente durchgeführt ist. Dabei ist das proximale, d.h. das zuletzt in das Rohr eingeführte, Falldämpferelement am flexiblen Träger befestigt, während die anschließenden Falldämpfer- und Federelemente parallel zum Träger federnd bewegbar sind. Der zentrale flexible Träger verleiht der Vorrichtung dabei zusätzliche Stabilität.

In einer weiteren bevorzugten Ausführungsform der Erfindung ist die Befüllvorrichtung, wie insbesondere deren Träger mit einer optischen oder akustischen Überwachungsvorrichtung kombiniert ist. Diese ermöglicht eine Überwachung und erforderlichenfalls Dokumentierung des Befüllvorgangs sowie die Einstellung eines im Wesentlichen konstanten Mindestabstand von unterem, distalem Falldämpferelement zur Schüttung und damit die Einstellung einer gewünschten freien Fallhöhe der Schüttgutpartikel.

Geeignete optische Überwachungsvorrichtungen sind am distalen Ende, das in das zu befüllende Rohr eingeführt wird, mit einer optischen Linse oder einem Detektor und gegebenenfalls einer Lichtquelle oder Schallquelle ausgestattet und am proximalen Ende mit einem Monitor oder sonstigem Kontrollgerät verbunden. Außerdem können geeignete Überwachungsvorrichtungen Mittel zum Aufzeichnen des Verlaufs der Rohrbefüllung umfassen. Derartige Überwachungsvorrichtung umfassen außerdem einen flexiblen Signalleiter, wie z.B. Lichtleiter, der auch gleichzeitig als Träger für Falldämpferelemente fungieren kann. Der Leiter kann insbesondere auch anstelle des zentralen Trägers in der oben beschriebenen Ausgestaltung der erfindungsgemäßen Vorrichtung mit einer Vielzahl von Falldämpfer- und Federelementen verwendet werden.

Die Linse oder der Detektor der Überwachungsvorrichtung ist vorzugsweise unterhalb des untersten Falldämpferelements der Vorrichtung angeordnet, so dass eine ungehinderte Überwachung und gegebenenfalls Aufzeichnung des Füllvorgangs ermöglicht wird.

Geeignete optischen Überwachungsvorrichtungen aus Kamera, Lichtleiter (Haspel) und Aufzeichungseinheit, wie sie z.B. zur Kontrolle vor Rohrleitungen eingesetzt werden, sind auf dem Markt erhältlich und können für die Bedürfnisse der vorliegenden Erfindung mit einem oder mehreren wie oben beschrieben Falldämpferelementen ausgerüstet werden. Beispielsweise werden geeignete Überwachungsvorrichtungen von der Firma Kummert Inspektionssysteme e.K., Gerolzhofen, Deutschland in verschiedenen Ausführungen vertrieben (wie z.B. Kamera K-35, Durchmesser des Kamerakopfs 35 mm; Haspel H-S 30; Durchmesser 6 mm). Derartige Vorrichtungen umfassen als Kamera einen Farb-CCD Sensor und als Lichtquelle im Kamerakopf angeordnete LEDs. Der Lichtleiter wird von Kunststoff-ummantelten Glasfaserkabeln mit einem Außendurchmesser von etwa 5 bis 8 Millimetern gebildet, an welchen die erfindungsgemäßen Falldämpferelemente in der oben beschriebenen Weise befestigbar sind..

Weiterhin kann eine erfindungsgemäße Vorrichtung trichterförmige Einfüllhilfen umfassen. Diese können auf das zu befüllende Rohr aufgesetzt werden. Beispielsweise umfassen geeignete Einfüllhilfen einen Rohrstutzen dessen Außendurchmesser dem Innendurchmesser des zu befüllender Rohres entspricht. Seitlich angebracht kann ein Einfülltrichter sein, in den das Schüttgut eingefüllt wird und von dort über den Rohrstutzen in das zu befüllende Rohr gelangt. Zusätzlich kann im Boden des Trichters eine Förderhilfe, wie z.B. eine Förderschnecke oder ein Förderrad, vorgesehen sein, welche eine konstante Menge des Schüttguts in das Rohr befördert.

Ein weiterer Gegenstand der Erfindung betrifft die Verwendung einer Befüllvorrichtung gemäß obiger Beschreibung zum Befüllen eines Rohrreaktors mit Katalysatorpartikeln.

Die erfindungsgemäße Vorrichtung ist für das Befüllen unterschiedlicher Reaktortypen geeignet. Beispielsweise können Reformer genannt werden.

Die erfindungsgemäße Vorrichtung ist außerdem für das Befüllen von Rohrreaktoren mit unterschiedlichst ausgebildeten Katalysatorteilchen geeignet. So können Vollkatalysator-Partikel oder geträgerte Katalysatoren, sogenannte Schalenkatalysatoren, besonders schonend verarbeitet werden. Die Partikel können in verschiedenen geometrischen Formen, wie z.B. in Form von Kugeln, Ringen, Zylindern, Hohlzylindern, Würfeln oder Quadern, vorliegen. Typischerweise liegt das Partikelgewicht im Bereich von etwa 1 bis 10, insbesondere 2 bis 4 Gramm.

Insbesondere sind die erfindungsgemäßen Vorrichtungen zum Befüllen von Rohrreaktoren mit einem Innendurchmesser von mehr als 50 mm, wie z.B. 70 bis 300 mm geeignet.

Gegenstand der Erfindung ist weiterhin ein Verfahren zur Befüllung einer vorzugsweise vertikal angeordneten Röhre mit partikelförmigem Material, dadurch gekennzeichnet, dass man die Vorrichtung gemäß obiger Definition über das obere Ende der Rohr so weit einführt dass das unterste Falldämpferelement den Rohrboden gerade nicht berührt, und die Vorrichtung entgegen der Fallrichtung der Partikel während der Befüllung aus dem Rohr entfernt. Dabei kann die Vorrichtung kontinuierlich oder schrittweise aus der Rohr entfernt werden.

Um das Einführen der Vorrichtung in das Rohr zu erleichtern, kann es gegebenenfalls zweckmäßig sein, am unteren Ende, d.h. unterhalb des zuerst eingeführten Falldämpferelements, ein Zuggewicht aus Stahl oder Hartgummi am Träger vorzusehen. Dieses kann beispielsweise zylinderförmig ausgebildet sein und ein Verhältnis von Durchmesser zu Länge von etwa 2:4 bis 1:10 aufweisen, wie z.B. eine Länge von 100 mm und einen Durchmesser von 20 bis 25 mm. Das Gewicht kann beispielsweise im Bereich von 50 bis 500 Gramm oder 100 bis 250 Gramm liegen.

Wird der Befüllvorhang z.B. optisch überwacht, so kann man diesen unterbrechen, wenn Bepackung des Rohres mit Füllgut ungleichmäßig erfolgt.

In einer weiteren Ausgestaltung des erfindungsgemäßen Verfahrens besteht die Möglichkeit eventuell anfallenden staubförmigen Abrieb der Katalysatorpartikel aus dem Rohr durch Einblasen von Luft zu entfernen. Dazu kann man gleichzeitig mit der Füllvorrichtung eine Druckluftleitung einführen, die auf das Partikelbett Luft bläst. Staubförmige Bestandteile werden dadurch aufgewirbelt und mit dem Luftstrom entgegen der Füllrichtung aus dem Rohr ausgetragen.

Ein letzter Gegenstand der Erfindung betrifft eine Füllvorrichtung mit optischer Überwachungsvorrichtung, umfassend einen optischen Lichtleiter, an dessen Eingang eine optische Sammellinse gegebenenfalls zusammen mit einer Lichtquelle ausgebildet ist, und dessen Ausgang mit einem Empfänger verbunden ist, wobei die Vorrichtung zusätzlich wenigstens ein Falldämpferelement gemäß obiger Definition trägt.

Die vorliegende Erfindung wird nunmehr unter Bezugnahme auf beiliegende, spezielle nichtlimitierende Ausführungsformen zeigende Figuren näher beschrieben

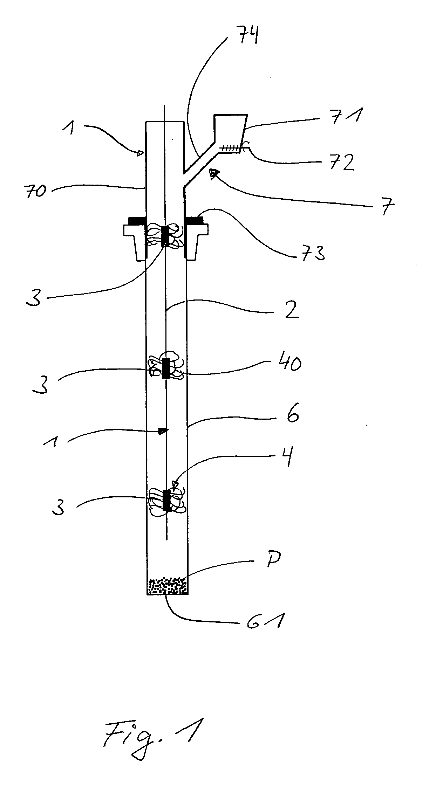

Figur 1 zeigt eine erfindungsgemäße Füllvorrichtung (1) während der Befüllung eines Rohres (6) mit Schüttgutpartikein (P). Insbesondere umfasst die Vorrichtung (1) drei erfindungsgemäße Falldämpferelemente (3), welche an einem Träger (2), wie einem biegsamen Stahlseil mit einem Durchmesser von 2 bis 8 mm, wie z.B. 3,5 bis 6 mm, befestigt sind. Jedes Falldämpferelement (3) trägt eine Vielzahl von irregulär angeordneten Netzelementen (40) welche das Netzgebilde (4) ausbilden. Weiterhin umfasst die Füllvorrichtung (1) eine in das obere, offenen Ende des Rohres (6) eingesetzte Einfüllhilfe (7), bestehend aus einem Rohrstutzen (70), einer als Anschlag dienenden, umlaufenden Krause (73) und einem oberhalb der Krause (73) mit dem Rohrstutzen (70) über eine Zuleitung (74) verbundene Trichter (71) mit eingesetzter schneckenförmiger Förderhilfe (72).

Figur 2 zeigt die Seitenansicht eines erfindungsgemäßen Falldämpferelements (3). Das Falldämpferelement (3) umfasst zwei Ringschrauben (30) zur Befestigung der Falldämpferelements (3) am Träger (2). Die Ringschrauben umfassen eine umlaufende als Anschlag dienende Krause (31) sowie einen Gewindehals (32) (verdeckt). Der Korpus (33) des Falldämpferelements (3) umfasst drei Segmente, welche von zwei seitlichen über den Gewindehals (32) der Schrauben (30) bis zu deren Anschlag (31) geschobene Hülsen (34) und einer zentralen Kupplungshülse (35) mit Innengewinde gebildet werden. Die Hülsen (34) und die Kupplungshülse (35) weisen etwa gleiche Außendurchmesser auf. Der Gewindehals (32) der Schrauben (30) ist dabei länger als die Hülse (34). Die Kupplungshülse (35) dient zur Verschraubung der beiden Ringschrauben (30). Zwischen Anschlag (31) und Hülse (34) sowie zwischen Hülse (34) und Kupplung (35) sind radial gekrümmte Fasern (400) des Netzgebildes (4) eingesetzt, welche nach radialer Ausrichtung durch Verschrauben der beiden Ringschrauben (30) mit der Kupplung (35) fixiert werden. Mehrere solcher Falldämpferelemente können unter Verwendung von Stahlseilen mit Hilfe herkömmlicher Seilklemmen seriell verknüpft werden.

In einer nicht dargestellten Abwandlung des Falldämpferelements (3) aus Figur 2 können die Hülsen (34) durch eine Vielzahl, wie z.B. 2 bis 5, mit den Ringschrauben verschraubbaren Muttern, wie z.B. handelsüblichen Sechskantmuttern mit Innengewinde, ersetzt sein. Je Ringschraube können so viele Muttern aufgeschraubt werden, dass ein sicheres Verschrauben mit der zentralen Kupplung (35) noch möglich ist. Zwischen zwei benachbarten Muttern sind auf diese Weise die radial gekrümmten Fasern fest verschraubbar.

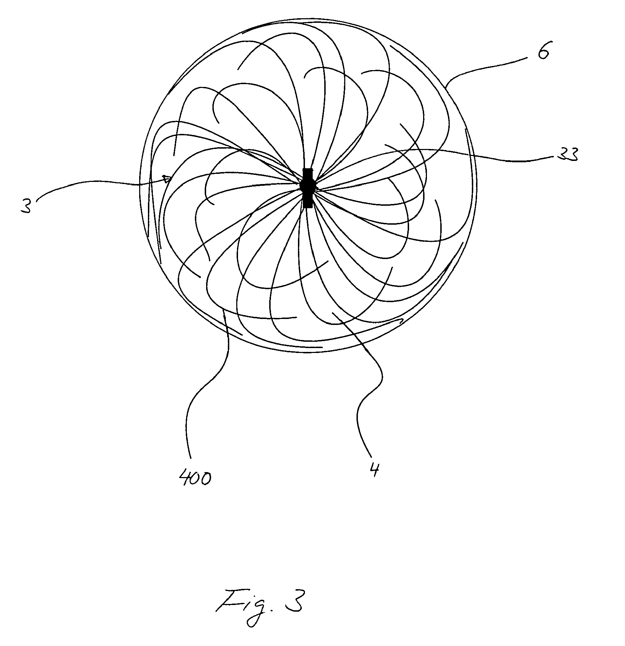

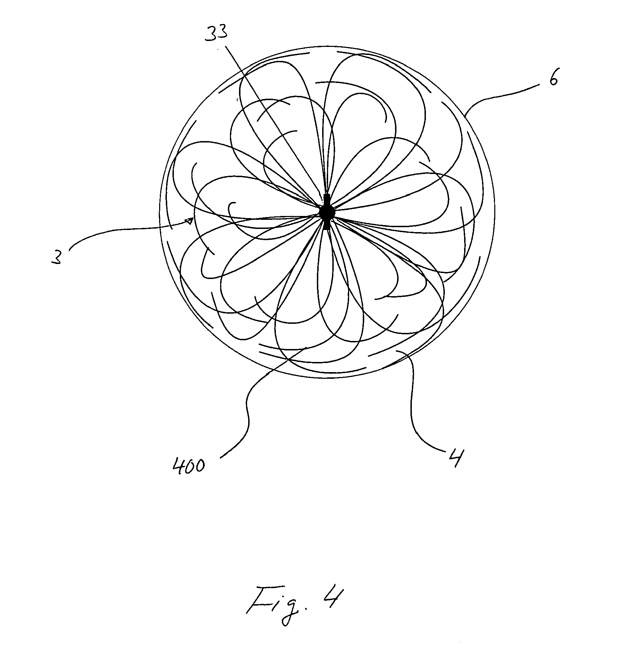

Figur 3 zeigt in der Draufsicht eines erfindungsgemäßen Falldämpferelements (3) entsprechend Figur 2 mit radial angeordneten, in gleicher Richtung aber unterschiedlich stark gekrümmten Fasern (400) unterschiedlicher Länge, welche eine asymmetrisches offenes Netzgebilde (4) ausbilden, dessen maximaler Durchmesser d dem Innendurchmesser dₗ des zu befüllenden Rohres (6) (als Kreis angedeutet) entspricht. Die Fasern (400) sind dabei am Korpus (33) des Falldämpferelements (3) radial verteilt, irregulär angeordnet.

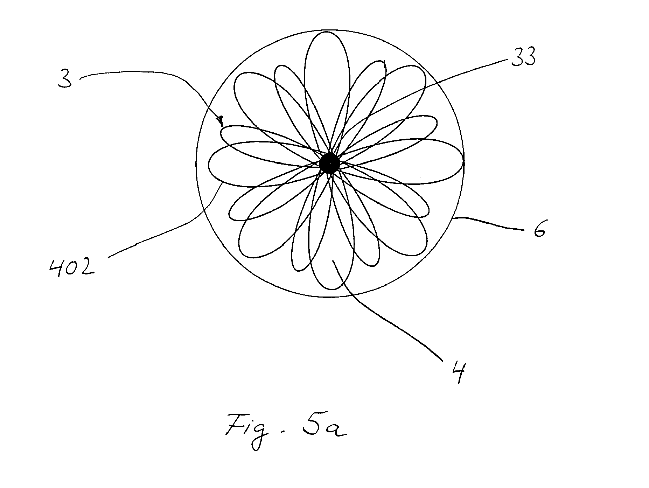

Figur 4 zeigt in der Draufsicht eine alternative Ausgestaltung eines Falldämpferelements (3) aus Figur 2 mit radial am Korpus (33) angeordneten, in verschiedenen Richtungen und unterschiedlich stark gekrümmten Fasern (400), welche eine asymmetrisches, offenes Netzgebilde (4) ausbilden.

Figur 5a zeigt in der Draufsicht eine weitere alternative Ausgestaltung eines Falldämpferelements (3) aus Figur 2 mit radial am Korpus (33) angeordneten Schlaufen (402) unterschiedlicher Länge, welche eine asymmetrisches, geschlossenes Netzgebilde (4) ausbilden. Figur 5b zeigt in der Draufsicht eine weitere alternative Ausgestaltung eines Falldämpferelements (3) aus Figur 5a welches von einem einstückigen, elastischen Faden (404) gebildet wird, der schlaufenartige Segmente ausbildet, indem er abschnittsweise am Korpus (33), z.B. über von dem Faden ausgebildete Ösen, befestigt ist. Auch hier wird ein asymmetrisches, geschlossenes Netzgebilde (4) ausgebildet.

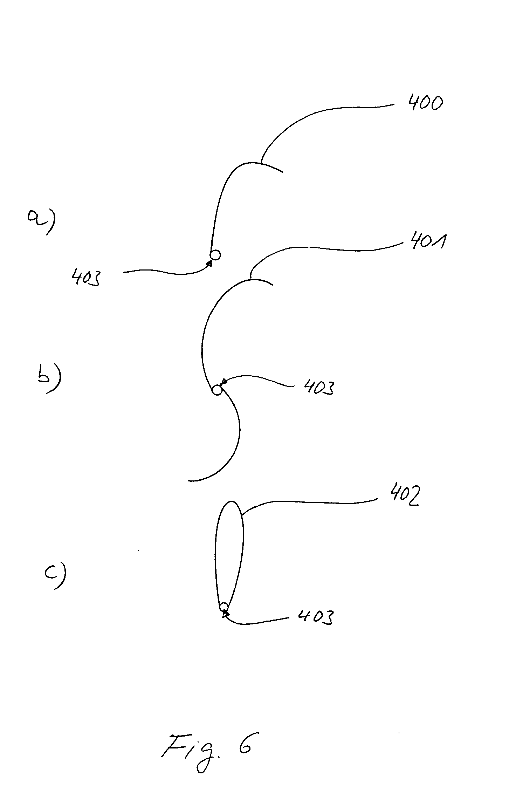

Figur 6 zeigt verschiedene Ausgestaltungen erfindungsgemäßer Netzelemente (40), und zwar a) als radial gekrümmte Einzelfaser (400), b) als radial gekrümmte S-förmige Doppelfasern (401); c) als Schlaufe (402). Jedes dieser Netzelemente ist aus einem Stück geformt und bildet eine zentrale Öse (403) aus , welche der Befestigung am Falldämpferelement (3) dient. Vorzugsweise wird durch die Öse (403) der Gewindehals (32) der Ringschraube (30) hindurchgeführt und in der oben beschriebenen Weise das Netzelement fixiert.

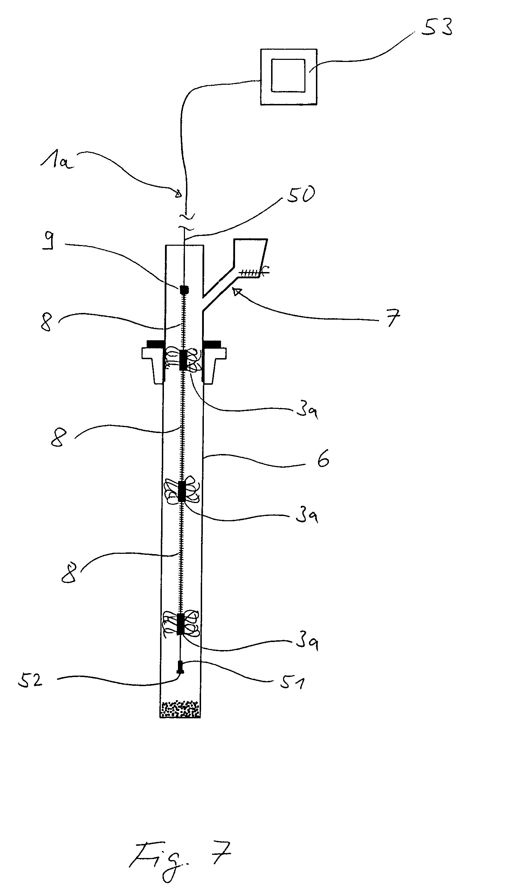

Figur 7 zeigt in schematischer Darstellung eine weitere Ausgestaltung einer in ein Rohr (6) eingesetzte Füllvorrichtung (1a) umfassend neben der oben bereits beschriebenen Einfüllhilfe (7) einen als Träger dienenden, flexiblen Lichtleiter (50), außerhalb des Rohres (6) verbunden mit einem Monitor (53) und am gegenüberliegenden im Rohr (6) befindlichen Ende ausgestattet mit einer Lichtquelle (52) und einer Linse (51). Die Vorrichtung umfasst drei Falldämpferelemente (3a) welche durch Spiralfedern (8) miteinander federnd verbunden sind. Das oberste der Falldämpferelemente (3a) ist mit Hilfe einer weiteren Spiralfeder (8) an einem an Lichtleiter angebrachten Anker (9) verbunden. Die Falldämpferelemente (3a) sind so ausgebildet, dass sie eine zentrale Bohrung aufweisen deren Innendurchmesser größer ist als der Außendurchmesser des Lichtleiters (50). Damit können sich die Falldämpferelemente (3a) parallel zum Lichtleiter (50) während des Füllvorgangs innerhalb des Rohres (6) federnd auf und ab bewegen.

### Bezugszeichenliste

- 1, 1a: Vorrichtung zum Befüllen
- 2: Träger
- 3, 3a: Falldämpferelement
- 4: Netzgebilde
- 5: optische Überwachungsvorrichtung
- 6: Rohr
- 7: Einfüllhilfe
- 8: Feder
- 9: Anker

- 31: Anschlag
- 32: Gewindehals
- 33: Korpus
- 34: Hülse
- 35: Kupplungshülse

- 40: Netzelement

- 50: Lichtleiter
- 51: Linse
- 52: Lichtquelle
- 53: Monitor

- 61: Rohrboden

- 70: Rohrstutzen
- 71: Förderhilfe
- 72: Trichter
- 73: Krause
- 74: Zuleitung

- 400: Fasern
- 401: Doppelfaser
- 402: Schlaufen
- 403: Öse
- 404: Faden

## Patentansprüche

1. Vorrichtung (1) zum Befüllen eines Rohres mit partikelförmigem Schüttgut, umfassend wenigstens ein an einem Träger (2) befestigtes, und zusammen mit dem Träger (2) in das zu befüllende Rohr einführbares Falldämpferelement (3), **dadurch gekennzeichnet, dass** das Falldämpferelement (3) ein für die Schüttgutpartikel durchlässiges Netzgebilde (4) trägt.

2. Vorrichtung nach Anspruch 1, wobei das Netzgebilde (4) einen maximalen radialen Durchmesser d aufweist, der etwa dem Rohr-Innendurchmesser dₗ = ± 20 % entspricht.

3. Vorrichtung nach Anspruch 1, **dadurch gekennzeichnet, dass** das Netzgebilde (4) aus einer Vielzahl elastischer Netzelemente (40) gebildet wird.

4. Vorrichtung nach einem der vorhergehenden Ansprüche, **dadurch gekennzeichnet, dass** das Netzgebilde (4) in seiner vertikalen Projektion asymmetrisch ausgebildet ist.

5. Vorrichtung nach einem der vorhergehenden Ansprüche, **dadurch gekennzeichnet, dass** das Netzgebilde (4) in seiner lateralen Projektion asymmetrisch ist.

6. Vorrichtung nach Anspruch 2, **dadurch gekennzeichnet, dass** die Netzelemente (40) radial und longitudinal verteilt am Falldämpferelement (3) angeordnet sind.

7. Vorrichtung nach Anspruch 2, **dadurch gekennzeichnet, dass** die Netzelemente (40) am Falldämpferelement (3) befestigt sind.

8. Vorrichtung nach einem der Ansprüche 3 bis 7, wobei die Netzelemente (40) als Schlaufen (401) ausgebildet sind, deren beide Enden am Falldämpferelement (3) (lösbar) befestigt sind.

9. Vorrichtung nach Anspruch 8, wobei wenigstens zwei Schlaufen (401) ineinander greifen.

10. Vorrichtung nach einem der Ansprüche 3 bis 7, **dadurch gekennzeichnet, dass** die Netzelemente (40) als radial gekrümmte Fasern (400) mit einem freien und einem am Falldämpferelement (3) befestigten Ende ausgebildet sind.

11. Vorrichtung nach Anspruch 10, **dadurch gekennzeichnet, dass** die Fasern (400) eines Falldämpferelements (3) gleiche oder verschiedene Krümmungsradien aufweisen.

12. Vorrichtung nach Anspruch 10 oder 11, **dadurch gekennzeichnet, dass** die am Falldämpferelement (3) befestigten Fasern (400) eines Falldämpferelements (3) in und/oder gegen die Fallrichtung des Schüttguts geneigt sind.

13. Vorrichtung nach einem der Ansprüche 10 bis 12, **dadurch gekennzeichnet, dass** die Länge der Faser (400) größer als der Rohrradius ist.

14. Vorrichtung nach einem der Ansprüche 10 bis 13, **dadurch gekennzeichnet, dass** die Fasern (400) des Falldämpferelements (3) gleiche oder entgegengesetzte Krümmungsrichtung aufweisen.

15. Vorrichtung nach einem der vorhergehenden Ansprüche, **dadurch gekennzeichnet, dass** das Netzgebilde (4) aus rostfreiem Stahl gefertigt ist.

16. Vorrichtung nach einem der vorhergehenden Ansprüche, umfassend ein bis fünf Falldämpferelemente (3) pro Längeneinheit.

17. Vorrichtung nach einem der vorhergehenden Ansprüche, wobei das Falldämpferelement eine Länge von 5 bis 20 Zentimetern aufweist und pro Zentimeter 0,5 bis 5 Netzelemente (4) trägt.

18. Vorrichtung nach einem der vorhergehenden Ansprüche, wobei der Träger (2) Federelemente (8) umfasst oder aus einer Vielzahl von Federelementen (8) gebildet wird.

19. Vorrichtung nach Anspruch 18, wobei das Federelement (8) zwei benachbarte Falldämpferelemente (3) federnd verbindet.

20. Vorrichtung nach einem der vorhergehenden Ansprüche, **dadurch gekennzeichnet, dass** der Träger (2) mit einer optischen Überwachungsvorrichtung (5) kombiniert ist.

21. Vorrichtung nach Anspruch 20, **dadurch gekennzeichnet, dass** die optische Überwachungsvorrichtung (5) am distalen Ende mit einer Linse/Detektor (51) und gegebenenfalls einer Lichtquelle (52) und am proximalen Ende mit einem Monitor (53) verbunden ist.

22. Vorrichtung nach Anspruch 21, wobei die Überwachungsvorrichtung einen flexiblen Lichtleiter (50) umfasst.

23. Vorrichtung nach Anspruch 22, wobei der Lichtleiter (50) gleichzeitig Träger (2) der Falldämpferelemente (3) ist.

24. Vorrichtung nach einem der Ansprüche 21 bis 23, wobei die Linse (51) unterhalb des untersten Falldämpferelements (3) der Vorrichtung (1) angeordnet ist.

25. Verwendung einer Vorrichtung nach einem der vorhergehenden Ansprüche zum Befüllen eines Rohrreaktors mit Katalysatorpartikeln.

26. Verwendung nach Anspruch 25, **dadurch gekennzeichnet, dass** der Rohrreaktor einen Innendurchmesser von 70 bis 300 mm aufweist.

27. Verfahren zur Befüllung einer vertikal angeordneten Röhre mit partikelförmigem Material, **dadurch gekennzeichnet, dass** man die Vorrichtung (1) über das obere Ende der Röhre so weit einführt dass das unterste Falldämpferelement (3) den Röhrenboden nicht berührt, und die Vorrichtung entgegen der Fallrichtung der Partikel während der Befüllung aus der Röhre entfernt.

28. Verfahren nach Anspruch 27, **dadurch gekennzeichnet, dass** Vorrichtung kontinuierlich oder schrittweise aus der Röhre entfernt wird.

29. Verfahren nach einem der vorherigen Ansprüche, **dadurch gekennzeichnet, dass** man den Füllvorgang unterbricht, wenn Bepackung ungleichmäßig erfolgt ist.

30. Optische Überwachungsvorrichtung (5), umfassend einen optischen Lichtleiter (50), an dessen Eingang eine optische Sammellinse (51) gegebenenfalls zusammen mit einer Lichtquelle (52) ausgebildet ist, und dessen Ausgang mit einem Empfänger (53) verbunden ist, wobei die Vorrichtung (5) zusätzlich Falldämpferelemente (3) gemäß der Definition in einem der Ansprüche 1 bis 17 aufweist.
